(19) Europäisches Patentamt / European Patent Office / Office européen des brevets

(11) **EP 1 942 147 B1**

(12) **EUROPÄISCHE PATENTSCHRIFT**

(45) Veröffentlichungstag und Bekanntmachung des Hinweises auf die Patenterteilung:
**01.04.2009 Patentblatt 2009/14**

(51) Int Cl.:
***C08L 77/00*** *(2006.01)*

(21) Anmeldenummer: **06027036.0**

(22) Anmeldetag: **28.12.2006**

(54) **Mit flachen Glasfasern verstärkte Polyamidformmassen sowie daraus hergestellte Spritzgussteile**

Polyamide moulding materials reinforced with flat glass fibers and articles injection-moulded therefrom

Matériaux à mouler de polyamide reinforcée avec des fibres de verre plates et objects moulés par injection de ces matériaux

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**09.07.2008 Patentblatt 2008/28**

(73) Patentinhaber: **EMS-CHEMIE AG**
**7013 Domat/Ems (CH)**

(72) Erfinder:
• **Stöppelmann, Georg, Dr.**
**7403 Bonaduz (CH)**
• **Rexin, Ornulf, Dr.**
**69120 Heidelberg (DE)**
• **Eichhorn, Volker**
**7000 Chur (CH)**

(74) Vertreter: **Becker Kurig Straus**
**Patentanwälte**
**Bavariastrasse 7**
**80336 München (DE)**

(56) Entgegenhaltungen:
**EP-A1- 0 190 011         EP-A2- 0 957 131**
**WO-A-02/40591**

• **DATABASE WPI Week 200656 Derwent Publications Ltd., London, GB; AN 2006-543890 XP002425923 & JP 2006 193727 A (TORAY IND INC) 27. Juli 2006 (2006-07-27)**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft verstärkte Polyamidformmassen, enthaltend tiefviskose Polyamide und Glasfasern mit flacher Gestalt, insbesondere Glasfasern mit nicht kreisförmiger Querschnittsfläche und einem Abmessungsverhältnis von der Haupt-Querschnittsachse zur Neben-Querschnittsachse von zwischen 2 und 5. Die vorliegende Erfindung betrifft weiterhin ein Verfahren zur Herstellung der Polyamidformmassen sowie daraus gefertigte Formteile, d. h. insbesondere Spritzgussteile.

Unter niedrigviskosen Polyamiden wird erfindungsgemäß ein Polyamid mit einer Lösungsviskosität von $\eta_{rel}$ kleiner 1,9 (gemessen in m-1, 0,5 Gew.-%, 20°C) verstanden. Der relativen Viskosität von $\eta_{rel}$ kleiner 1,9 entspricht ein Molekulargewicht ($M_n$, Zahlenmittel) der Polyamide von kleiner 20.000 g/mol.

Verstärkte Polyamide spielen eine zunehmende Rolle im Bereich der technischen Konstruktionswerkstoffe, da sie neben hoher Steifigkeit, eine gute Zähigkeit und Wärmeformbeständigkeit zeigen. Einsatzgebiete sind, z. B. Innen- und Außenteile im Automobilsektor und im Bereich von anderen Transportmitteln, Gehäusematerial für Geräte und Apparate für die Telekommunikation, Unterhaltungselektronik, Haushaltsapparate, Maschinenbauapparate, Apparate im Heizungsbereich und Befestigungsteile für Installationen. Wichtig sind bei Teilen z. B. im Automobilsektor metallähnliche Eigenschaften, die aber nur durch hochgefüllte, verstärkte Formmassen erzielt werden. Bei dünnwandigen Teilen ist insbesondere eine hohe Fliesslänge der Formmassen notwendig, die allerdings bei mit Endlosfasern verstärkten Formmassen nicht oder sehr schlecht erzielt werden kann.

Der besondere Vorteil von verstärkten Polyamiden liegt außerdem im außergewöhnlich guten Verbund zwischen Polymermatrix und Verstärkungsstoffen. Dies gilt auch bei hohen Verstärkungsgraden, die zu Produkten mit hohem Zug-E-Modul führen. Die Zähigkeit der Produkte genügt allerdings nicht allen Anforderungen.

Im folgenden sollen in der vorliegenden Anmeldung unter Polyamiden solche Polymere verstanden werden, deren Grundbausteine durch Amid-Bindungen (-NH-CO-) zusammengehalten werden und die sich durch Polykondensation oder Polymerisation aus Monomeren, wie z.B. Dicarbonsäuren, Dicarbonsäurehalogeniden, Dinitrilen, Diaminen, Aminocarbonsäuren und/oder Lactamen, herstellen lassen. Es kann sich dabei um Homo- oder Copolyamide handeln. Das Zahlenmittel des Molekulargewichts der Polyamide sollte über 5.000, vorzugsweise über 10.000 aber unter 20.000 liegen, entsprechend Lösungsviskositäten von $\eta_{rel}$ kleiner 1,9, insbesondere von $\eta_{rel}$ kleiner 1,8, besonders bevorzugt von $\eta_{rel}$ kleiner 1,7.

EP 0 957 131 A2 beschreibt verstärkte Polyamidformmassen, enthaltend bis zu 4 Gew.-% eines Präpolymers PA12 mit $\eta_{rel}$ = 1,10, mindestens 46 Gew.-% PA 12 oder MACM und Glasfasern mit kreisförmigem Querschnitt. Bei den Glasfasern handelt es sich um Schnittglas.

JP 2006-193727 A beschreibt die Verwendung von Polyamidformmassen zur Herstellung verschiedener verstärkter Komponenten, beispielsweise Mobilfunktelefongehäusen.

EP 0 190 011 B1 beschreibt Glasfasern mit elliptischem oder rechteckigem Querschnitt sowie deren Herstellung. Der Einsatz dieser speziellen Glasfasern zur Herstellung von Composite-Teilen wird erwähnt. Aufgrund der größeren Oberfläche der Fasern ergeben sich höhere Festigkeitswerte in Composites.

EP 0 196 194 B1 beschreibt einen Strang, bestehend aus einer Vielzahl von Einzelfilamenten aus Glas, die einen nicht kreisförmigen Querschnitt aufweisen, sowie deren Herstellung. Der Querschnitt der Glasfasern kann oval, elliptisch, kokonförmig oder polygonal sein.

EP 0 199 328 B1 beschreibt ein Gewebe für Leiterplatten, das im wesentlichen aus Glasfasern mit nicht kreisförmigem Querschnitt zusammengesetzt ist. Die Einzelfasem haben ovalen, länglichen oder elliptischen Querschnitt. Als Matrices für dieses Gewebe werden ungesättigte Polyesterharze, Epoxyharze, Phenolharze, Polyimidharze oder PTFE beschrieben.

EP 0 246 620 B1 beschreibt einen Gegenstand aus einem glasfaserverstärkten thermoplastischen Kunststoff, wobei die Glasfasern einen rechteckigen, elliptischen oder hüllenförmigen Querschnitt aufweisen. Es wird aufgezeigt, dass Glasfasern mit nicht kreisförmigem Querschnitt Vorteile hinsichtlich der Festigkeit und der Zähigkeit gerade bei hohem Verstärkungsgrad ($\geq$ 60%) aufweisen.

EP 0 376 616 B1 beschreibt eine thermoplastische Polymerzusammensetzung, umfassend einen thermoplastischen Kunststoff und 1 bis 65 % einer faserartigen Verstärkung mit einem nicht kreisförmigen Querschnitt, wobei die Querschnittsfläche und das Verhältnis der senkrecht zueinander stehenden Querschnittsachsen der Verstärkungsfasern näher charakterisiert sind. Der Querschnitt der Verstärkungsfasern weist eine gekrümmte oder halbrunde Kontur auf. Die Zusammensetzung zeichnet sich durch eine hohe Dimensionsstabilität und geringeren Verzug aus.

EP 0 400 935 B1 beschreibt eine flammgeschützte faserverstärkte Polyester-Zusammensetzung, die 1 bis 60 Gew.-% Glasfasern enthält. Gemäß EP 0 400 935 B 1 weisen die eingesetzten Glasfasern eine Querschnittsform auf, die ausgewählt ist aus der Gruppe aus abgeplatteten, elliptischen, ovalen, halbrunden, gekrümmten und rechteckigen Querschnittsformen. Diese flammgeschützten verstärkten Polyesterzusammensetzungen gemäß EP 0 400 935 B1 zeigen eine verminderte Deformation, ohne dass die ihnen eigenen mechanischen Eigenschaften von kristallinen Polyesterharzen nachteilig beeinflusst werden. Diesbezüglich wurde gemäß EP 0 400 935 B1 festgestellt, dass die Deformation, d. h. das Werfen von kristallinen Polyesterharzen reduziert werden kann, ohne dass die mechanischen Eigenschaften des Harzes, zum Beispiel die Biegefestigkeit und die Steifheit als auch die Verarbeitbarkeit reduziert werden.

Zur Reduktion des Verzugs von thermoplastisch hergestellten Formteilen wird gemäß JP 10219026 A2 die Thermoplastmatrix mit einer Mischung aus Glasfasern mit kreisförmigem Querschnitt und Glasfasern mit flachem Querschnitt verstärkt. Im einzigen Beispiel dieses Dokuments wird Polyamid 66 als Polymermatrix aufgeführt.

JP 2004285487 A1 beschreibt ein Glasfaserbündel, bestehend aus Glasfilamenten mit flachem Querschnitt, die durch eine nichtflüchtige Schlichte zusammengehalten werden sowie eine thermoplastische Zusammensetzung, bestehend aus 5 bis 75 % dieser Glasfaserbündel und einer Polyolefin-Matrix.

JP 2006045390 A2 beschreibt ein langglasfaserverstärktes Granulat, bestehend aus einer thermoplastischen Matrix und bis zu 60 Gew.-% Glasfasern mit flachem Querschnitt. Granulat- und Faserlänge sind identisch. Vorteilhafte Eigenschaften der aus der verstärkten Zusammensetzung gemäß JP 2006045390 A2 hergestellten Formteile sind eine gute Oberflächenqualität und hohe Schlagzähigkeit.

In der noch nicht veröffentlichten Patentanmeldung EP 06014372.4 werden Polyamidformmassen, die bei guten mechanischen Eigenschaften einen sehr geringen Verzug aufweisen, beschrieben. Erreicht wird dies durch eine Kombination von transparentem Polyamid mit faserförmigen Verstärkungsstoffen sowie partikulären Füllstoffen. Hinsichtlich der faserförmigen Verstärkungsstoffe bestehen grundsätzlich keine Beschränkungen, vorzugsweise sind diese ausgewählt aus der Gruppe, bestehend aus Glasfasern, Kohlenstofffasern, Metallfasern, Aramidfasern, Whiskers und Mischungen davon. Die Glasfasern können dabei als Endlosfasern oder als geschnittene Glasfasern zugesetzt werden. Die Glasfasern können einen runden, ovalen oder rechteckigen Querschnitt aufweisen.

Die ebenfalls noch nicht veröffentlichte Anmeldung EP 05025216.2 beschreibt verstärkte Polyamidformmassen aus einem Blend aus Polyamid 66 und einem Copolyamid 6T/6I. Als Verstärkungsmaterial wird eine Mischung aus Glasfasern und Kohlenstofffasern eingesetzt.

Um eine weitere Erhöhung der Steifigkeit zu erhalten, wird ein Teil der Glasfasern durch Kohlenstofffasern ersetzt, so dass ein Hybridfaser verstärkter Compound zu Einsatz kommt.

Es ist daher Aufgabe der vorliegenden Erfindung, neue verstärkte Polyamidformmassen auf Basis von tiefviskosen Polyamiden, d. h. mit Molekulargewichten ($M_n$) von unter 20.000 g/mol zur Verfügung zu stellen, die den Formmassen mit Glasfasern mit kreisförmigen Querschnitt hinsichtlich der mechanischen und Verarbeitungs-Eigenschaften deutlich überlegen sind. Die aus den Formmassen hergestellten Formteile sollen außerdem eine hohe Quersteifigkeit und Querfestigkeit aufweisen.

Die obige Aufgabe wird durch die Polyamidfomunassen gemäß Anspruch 1, das Verfahren gemäß Anspruch 13, die Verwendung gemäß Anspruch 15, das Verfahren zur Herstellung der Formkörper gemäß Anspruch 16 sowie Formkörper, insbesondere die Spritzgussteile gemäß Anspruch 17 gelöst.

In den Unteransprüchen sind vorteilhafte Ausführungsformen der Erfindung enthalten.

Die Erfindung betrifft daher in einer Ausführungsform (I) verstärkte Polyamidformmassen mit hoher Kerbschlagzähigkeit, enthaltend tiefviskose Polyamide und flache Glasfasern als ein verstärkendes Medium, enthaltend eine Polyamidmatrix, umfassend folgende Komponenten:

(A) bis zu 60 Gew.-%, insbesondere 20 bis 60 Gew.%, mindestens eines aliphatischen, teilkristallinen Polyamids mit einer Lösungsviskosität, gemessen in m-Kresol (0,5 Gew.-%), von $\eta_{rel}$ kleiner 1,9 sowie eine Füllstoffkomponente, enthaltend (C) 40 bis 80 Gew.-% flache Glasfasern mit länglicher Gestalt, wobei die Glasfasern eine nicht kreisförmige Querschnittsfläche und ein Abmessungsverhältnis von der Haupt-Querschnittsachse zur Neben-Querschnittsachse von zwischen 2 bis 5, insbesondere von zwischen 3 und 4 aufweisen, und gegebenenfalls (D) bis zu 40 Gew.-% teilchen- oder schichtförmige Füllstoffe, und gegebenenfalls bis zu 5 Gew.-% weitere übliche Zusatz- und Hilfsstoffe (E), wobei die Gewichtsprozente der Komponenten (A), (C) und gegebenenfalls (D) und (E) zusammen 100 Gew.-% ergeben, mit der Maßgabe, dass Kohlenstofffasern ausgenommen sind.

In einer alternativen Ausführungsform (II) betrifft die vorliegende Erfindung verstärkte Polyamidformmassen mit hoher Kerbschlagzähigkeit, enthaltend tiefviskose Polyamide und flache Glasfasern als verstärkendes Medium, enthaltend eine Polyamidmatrix, umfassend bis zu 60 Gew.-%, insbesondere 20 bis 60 Gew.-% wenigstens eines amorphen oder mikrokristallinen Polyamids (B) mit einer Lösungsviskosität, gemessen in m-Kresol (0,5 Gew.-%), von $n_{rel}$ kleiner 1,9, und eine Füllstoffkomponente, enthaltend (C) 40 bis 80 Gew.-% flache Glasfasern mit länglicher Gestalt, wobei die Glasfasern eine nicht kreisförmige Querschnittsfläche und ein Abmessungsverhältnis von der Haupt-Querschnittsachse zur Neben-Querschnittsachse von zwischen 2 bis 5, insbesondere von zwischen 3 und 4 aufweisen, und gegebenenfalls (D) teilchen- oder schichtförmige Füllstoffe, und gegebenenfalls übliche Zusatz- und Hilfsstoffe (E) mit der Maßgabe, dass Carbon- bzw. Kohlenstofffasern ausgenommen sind, wobei die Gewichtsprozente der Komponenten (B), (C) und gegebenenfalls (D) und (E) zusammen 100 % ergeben.

In einer anderen Ausführungsform (III) der vorliegenden Erfindung betrifft diese verstärkte Polyamidformmasse mit hoher Kerbschlagzähigkeit, enthaltend tiefviskose Polyamide und flache Glasfasern als ein verstärkendes Medium, eine Polyamidmatrix, enthaltend folgende Komponenten:

(A) bis zu 60 Gew.-% mindestens eines aliphatischen, teilkristallinen Polyamids mit einer Lösungsviskosität gemessen in m-Kresol (0,5 Gew.-%), von $\eta_{rel}$ kleiner 1,9,

(B) bis zu 60 Gew.-% wenigstens eines amorphen oder mikrokristallinen Polyamids auf Basis von aliphatischen, cycloaliphatischen oder aromatischen Diaminen, Dicarbonsäuren, Lactamen und/oder Aminocarbonsäuren, bevorzugt mit 6 bis 36 Kohlenstoffatomen, oder eine Mischung solcher Homopolyamide und/oder Copolyamide, wobei die Komponenten (A) und (B) die Bedingungen erfüllen:

$$(A) + (B) = 20 \ \text{bis} \ 60 \ \text{Gew.-\%}$$

und dass im Gemisch (der Komponenten (A) und (B)) mindestens 50 Gewichtsteile aliphatischer Bausteine (A) vorliegen, und

- eine Füllstoffkomponente, enthaltend:

  (C) 40 bis 80 Gew.-% flache Glasfasern mit länglicher Gestalt, wobei die Glasfasern eine nicht kreisförmige Querschnittsfläche und ein Abmessungsverhältnis von der Haupt-Querschnittsachse zur Neben-Querschnittsachse von zwischen 2 bis 5, insbesondere von zwischen 3 und 4 aufweisen, und gegebenenfalls
  (D) 0 bis 40 Gew.-% teilchen- oder schichtförmige Füllstoffe, und
  (E) übliche Zusatz- und Hilfsstoffe (E),

wobei die Gewichtsprozente der Komponenten (A) bis (E) zusammen 100% ergeben, mit der Maßgabe, dass Carbon- und Kohlenstofffasern ausgenommen sind.

Es wurde erfindungsgemäß festgestellt, dass flache Glasfasern (Verhältnis der Querschnittsachsen > 2) im Vergleich zu solchen mit kreisförmigem Querschnitt deutliche Vorteile in den mechanischen Eigenschaften, der Verarbeitung und der Oberflächenqualität zeigen. Dies gilt insbesondere bei hohen Glasfasergehalten von > 50%. So wird in den erfindungsgemäßen Polyamidformmassen, insbesondere z. B. in PA12 bei 65 Gew.-% Glasfasern bei sonst gleicher Rezeptur mit flachen Glasfasern eine doppelt so hohe Kerbschlagzähigkeit wie bei der Verwendung von Glasfasern mit kreisförmiger Geometrie gefunden. Diese hohen Zähigkeitswerte werden auch erhalten wenn eine erfindungsgemäße Polyamidformmasse, insbesondere ein PA12 mit niedriger Molmasse eingesetzt wird. Ein PA12 mit niedriger Molmasse besitzt eine niedrige Schmelzviskosität und damit Vorteile für die Spritzgussverarbeitung.

Üblicherweise werden bei Polyamiden mit niedrigen Molmassen tiefere Zähigkeitswerte gefunden als bei solchen mit höheren Molmassen. Bei hohen Füllgraden wird allerdings durch eine größere Viskosität der höher molekularen Polyamide die thermoplastische Verarbeitung erschwert. Dies äußert sich in erschwerter Formfüllung, Einfallstellen und schlechter Oberflächenqualität.

Es wurde nun erfindungsgemäß weiterhin festgestellt, dass besonders bei hohen Anteilen von flachen Glasfasern sich mit den erfindungsgemäßen Formmassen, insbesondere mit tiefviskosen, aliphatischen teilkristallinen Polyamiden, besonders bevorzugt mit tiefviskosem PA 12 Produkte herstellen lassen, die sich durch eine gute Verarbeitbarkeit, geringen Verzug, hohe Oberflächengüte und wesentlich höhere Zähigkeit als solche Materialien auszeichnen, die Glasfasern enthalten, die einen kreisförmigen Querschnitt besitzen.

Im Vergleich zu Glasfasern mit kreisförmigen Querschnitts erlauben Glasfasern mit einem Querschnitt, dessen Haupt- und Nebenachse unterschiedliche Werte aufweisen (flache Glasfasern), eine merklich höhere Packungsdichte bei hohen Verstärkungsgraden, wodurch höhere Moduli und Festigkeiten, insbesondere quer zur Faserrichtung resultieren. Die zu erwartende Verbesserung hinsichtlich Steifigkeit und Festigkeit kommt aber nur dann in vollem Umfang zum tragen, wenn die tendenziell kleineren Räume zwischen den flachen Glasfasern mit Polymermatrix ausreichend infiltriert werden und die Matrix ein hinreichendes Weiterleiten der auftretenden Kräfte bei Deformation ermöglicht. Erst die erfindungsgemäß eingesetzten Polyamide mit tiefer Viskosität schöpfen das Potential der geometrisch vorteilhaften, flachen Glasfasern voll aus.

Gerade Bauteile, die während der Anwendung unter Druckbelastung stehen, wie z.B. Ventil- oder Wasserzählergehäuse, profitieren von der erhöhten Steifigkeit und Festigkeit quer zur Faserausrichtung, weil hierdurch u.a. der Berstdruck und die Formhaltigkeit verbessert werden. Aufgrund der höheren Quersteifigkeit der aus den erfindungsgemässen Formmassen gefertigten Bauteile, welche je nach Zusammensetzung um 10 bis 40% über dem Niveau der Formmassen mit Glasfasern kreisförmigen Querschnitts liegt, ergeben sich deutlich geringere Deformationen des Bauteils unter wechselnder Druckbelastung. Dies ist von besonderem Interesse, da gerade Formmassen auf Basis aliphatischer Polyamide verstärkt mit üblichen Glasfasern kreisförmigen Querschnitts eine im Vergleich mit der Längssteifigkeit geringe Quersteifigkeit aufweisen. Dieser Mangel kann durch Verwendung von flachen Glasfasern in Kombination mit niederviskosen Polyamiden ausgeglichen werden, da hierdurch nicht nur die einzelnen Werte für die Längs- und Quersteifigkeit, sondern auch das Verhältnis der Quer- zur Längssteifigkeit erhöht wird.

Die erfindungsgemäß eingesetzte Matrix der Polyamidformmassen basiert, wie oben beschrieben wurde, auf mindestens einem aliphatischen, teilkristallinen Polyamid (Komponente (A)) oder auf mindestens einem amorphen oder mikrokristallinen Polyamid (Komponente B) oder auf einer Mischung der Komponenten A und B, wobei im Gemisch von (A) und (B) dann mindestens 50 Gew.-Teile aliphatischer Bauteile (A) vorliegen müssen.

Das aliphatische, teilkristalline Polyamid (Komponente (A)) hat eine Lösungsviskosität, gemessen in m-Kresol (0,5 Gew.-%, 20°C) von $\eta_{rel}$ kleiner 1,9, bevorzugt von $\eta_{rel}$ kleiner 1,8, insbesondere von $\eta_{rel}$ kleiner 1,7. In Frage kommt als aliphatisches Polyamid ein Polyamid aus der Gruppe, bestehend aus Polyamid 6, Polyamid 46, Polyamid 66, Polyamid 11, Polyamid 12, Polyamid 1212, Polyamid 1010, Polyamid 1012, Polyamid 1112, Polyamid 610, Polyamid 612, Polyamid 69, Polyamid 810 oder deren Gemische, Blends oder Legierungen.

In einer besonderen Ausführungsform der Erfindung werden mindestens zwei aliphatische Polyamide mit unterschiedlicher Lösungsviskosität zusammen mit den übrigen Komponenten verwendet. Beispielsweise wird ein PA12 mit einer Lösungsviskosität im Bereich von 1,45 bis 1,67 und ein PA12 mit einer Lösungsviskosität im Bereich von 1,75 bis 1,9 gemischt, wobei das Mischungsverhältnis von niedrig und höher viskosem PA12 zwischen 80:20 und 20:80 liegt.

In einer alternativen Ausführungsform enthält die Polyamidformmasse neben der Komponente (A) auch bis zu 50 Gew.-%, bevorzugt bis zu 20 Gew.-%, besonders bevorzugt bis zu 15 Gew.-%, wenigstens eines amorphen oder mikrokristallinen Polyamids (Komponente (B)) auf Basis von aliphatischen, cycloaliphatischen oder aromatischen Diaminen, Dicarbonsäuren, Lactamen und/oder Aminocarbonsäuren, bevorzugt mit 6 bis 36 Kohlenstoffatomen, oder eine Mischung solcher Homopolyamide und/oder Copolyamide. Gemäß dieser Ausführungsform enthalten die Formmassen bevorzugt 1 - 20 Gew.-%, insbesondere 3 - 15 Gew.-% Komponente (B).

Für die erfindungsgemäß eingesetzten amorphen oder mikrokristallinen Polyamide (Kompnente (B)) und/oder Copolyamide werden folgende Systeme bevorzugt:

Polyamid auf Basis von aliphatischen, cycloaliphatischen oder aromatischen Diaminen, Dicarbonsäuren, Lactamen und/oder Aminocarbonsäuren, bevorzugt mit 6 bis 36 Kohlenstoffatomen, oder eine Mischung solcher Homopolyamide und/oder Copolyamide. Bevorzugt handelt es sich bei den cycloaliphatischen Diaminen dabei um MACM, IPD (Isophorondiamin) und/oder PACM, mit oder ohne zusätzliche Substituenten. Bei der aliphatischen Dicarbonsäure handelt es sich vorzugsweise um eine aliphatische Dicarbonsäure mit 2-36, bevorzugt 8-20, linear oder verzweigt angeordneten Kohlenstoffatomen, insbesondere bevorzugt mit 10, 12, 13, 14, 16 oder 18 Kohlenstoffatomen.

Dabei steht MACM für die ISO-Bezeichnung Bis-(4-amino-3-methyl-cyclohexyl)-methan, welches unter dem Handelsnamen 3,3'-Dimethyl-4-4'-diaminodicyclohexylmethan als Laromin C260-Typ (CAS Nr. 6864-37-5), bevorzugt mit Schmelzpunkt zwischen -10°C und 0°C, kommerziell erhältlich ist. Eine Ziffer wie z.B. in MACM12 steht dabei für eine aliphatische lineare C12 Dicarbonsäure (DDS, Dodecandisäure), mit welcher das Diamin MACM polykondensiert ist.

IPS steht für Isophthalsäure und PACM steht für die ISO-Bezeichnung Bis-(4-aminocyclohexyl)-methan, welches unter dem Handelsnamen 4,4'-Diaminodicyclohexylmethan als Dicykan-Typ (CAS Nr. 1761-71-3), bevorzugt mit Schmelzpunkt zwischen 30°C und 45°C, kommerziell erhältlich ist.

Ein Homopolyamid ausgewählt aus der Gruppe MACM 12, MACM13, MACM 14, MACM16, MACM18, PACM12, PACM13, PACM14, PACM16, PACM18 und/oder ein Copolyamid ausgewählt aus der Gruppe MACM12/PACM12, MACM13/PACM13, MACM14/PACM14, MACM16/PACM16, MACM18/PACM18. Ebenfalls möglich sind Mischungen solcher Polyamide.

Polyamide, auf Basis von aromatischen Dicarbonsäuren mit 8 bis 18, bevorzugt 8-14 Kohlenstoffatomen oder eine Mischung solcher Homopolyamide und/oder Copolyamide, bevorzugt auf Basis von PXDA und/oder MXDA, insbesondere bevorzugt auf Basis von Lactamen und/oder Aminocarbonsäuren, wobei es sich bei den aromatischen Dicarbonsäuren bevorzugt um TPS, Naphthalindicarbonsäure und/oder IPS handelt.

Polyamide, ausgewählt aus der Gruppe: MACM9-18, PACM9-18, MACMI/12, MACMI/MACMT, MACMI/MACMT/12, 6I6T/MACMI/MACMT/12, 3-6T, 6I6T, TMDT, 6I/MACMI/MACMT, 6I/PACMI/PACMT, 6I/6T/MACMI, MACMI/MACM36, 6I, 12/PACMI oder 12/MACMT, 6/PACMT, 6/6I, 6/IPDT oder Mischungen daraus, wobei 50 mol.-% der IPS durch TPS ersetzt sein kann.

Die genannten amorphen oder mikrokristallinen Polyamide (Komponente B) haben eine Glasübergangstemperatur von größer 110°C, bevorzugt von größer 130°C und insbesondere von größer 150°C. Die relative Lösungsviskosität liegt im Bereich von 1,4 bis unter 1,9 (gemessen in m-Kresol, 0,5 Gew.-%, gemessen bei 20°C), bevorzugt im Bereich zwischen 1,5 und 1,8 und insbesondere im Bereich zwischen 1,55 und 1,75.

Die mikrokristallinen Polyamide besitzen eine Schmelzwärme im Bereich von 4 bis 25 J/g (mittels DSC bestimmt), die amorphen Polyamide haben Schmelzwärmen kleiner als 4 J/g. Bevorzugt werden mikrokristalline Polyamide auf Basis der Diamine MACM und PACM eingesetzt. Beispiele für solche Polyamide sind die Systeme PA MACM9-18/PACM9-18, wobei insbesondere PA MACM12/PACM12 mit einem PACM-Anteil von größer 55 mol-% (bezogen auf die gesamte Diaminmenge) erfindungsgemäß eingesetzt wird.

Als Komponente (B) werden bevorzugtermaßen amorphe und/oder mikrokristalline Polyamide eingesetzt, deren Glasübergangstemperatur mindestens 130°C, bevorzugt mindestens 150°C beträgt.

In einer weiteren bevorzugten Ausführungsform werden als Komponente (B) mikrokristalline Polyamide eingesetzt, deren Schmelzenthalpie mindestens 4J/g beträgt und bevorzugt im Bereich von 4 bis 25 J/g liegt.

Die erfindungsgemäß eingesetzten flachen Glasfasern sind Glasfasern mit flacher Gestalt und einer nicht kreisförmigen Querschnittfläche, wobei das Verhältnis der senkrecht aufeinanderstehenden Querschnittsachsen größer oder gleich 2 ist, und die kleinere Querschnittsachse eine Länge von $\geq 3~\mu m$ aufweist. Die Glasfasern liegen in Form von Schnittglas mit einer Länge von 2 bis 50 mm vor. Die Glasfaserkonzentration in den erfindungsgemäßen Formmassen liegt zwischen 40 und 80 Gew.-%, bevorzugt zwischen 50 und 70 Gew.-% und ist in einer besonderen Ausführungsform der Erfindung immer in Mengen von größer als 60 Gew.-% vorhanden.

Durch den erfindungsgemäßen Einsatz von Schnittglas können Langglasfasergranulate ausgeschlossen werden. Überraschenderweise ist es erfindungsgemäß gelungen, hohe Kerbschlagwerte zu erzielen, die sonst nur bei Langfaserverstärkung und Polyamiden mit hohen Molekulargewichten beobachtet werden und die hier bei Schnittglasfasern auftreten. Auch werden die einzelnen Filamente erfindungsgemäß nicht durch irgendwelche "Kleber" oder spezielle Schlichten zu Bündeln zusammengehalten. Erfindungsgemäß erzielt man hohe Kerbschlagzähigkeitswerte, insbesondere bei hohen Verstärkungswerten: Kerbschlagszähigkeitswerte von größer 25 kJ/m$^2$ bei einem Glasfaseranteil von 50 bis 60 Gew.-%, Kerbschlagzähigkeiten von größer 30 kJ/m$^2$ bei einem Glasfaseranteil von über 60 Gew.-%.

Weiterhin erzielt man erfindungsgemäß hohe Fliesslängen, insbesondere bei den aus den Formmassen hergestellten dünnwandigen (Spritzguss) Teilen: Fliesslängen von > 200 mm bei Verstärkungsgraden von $\geq$ 40 Gew.-%. Die Oberflächenqualität der aus den Formmassen hergestellten Spritzgussteile ist ebenfalls ganz hervorragend, wie aus der beiliegenden Tabelle 1 (Glanzwerte) ersichtlich ist.

Optional können weitere Füll- und Verstärkungsstoffe den Polyamidformmassen (Komponente (D)) in Mengen von 0 bis 40 Gew.-% zugesetzt sein, wobei Kohlenstofffasern ausgenommen sind.

Die erfindungsgemäßen Formmassen können aber auch weitere Zusatzstoffe (E), wie z. B. aus der Gruppe der anorganischen Stabilisatoren, organischen Stabilisatoren, Gleitmittel, Farbstoffe, Nukleierungsmittel, metallischen Pigmente, Metallflitter, metallbeschichtete Partikel, halogenhaltigen Flammschutzmittel, halogenfreien Flammschutzmittel, Schlagzähmodifikatoren, Antistatika, Leitfähigkeitsadditive, Entformungsmittel, optischen Aufheller, natürlichen Schichtsilikate, synthetischen Schichtsilikate oder Gemische der genannten Zusatzstoffe enthalten.

Als Antistatika können in den erfindungsgemäßen Formmassen z. B. Ruß und/oder Kohlenstoffnanoröhrchen eingesetzt werden.

Die Verwendung von Russ kann aber auch der Verbesserung der Schwarzfärbung der Formmasse dienen.

Als Schichtsilikate können in den erfindungsgemäßen Formmassen, z.B. Kaoline, Serpentine, Talkum, Glimmer, Vermiculite, Illite, Smectite, Montmorillonit, Hectorit, Doppelhydroxyde oder Gemische davon eingesetzt werden. Die Schichtsilikate können oberflächenbehandelt, aber auch unbehandelt sein.

Als Stabilisatoren bzw. Alterungsschutzmittel können in den erfindungsgemäßen Formmassen, z.B. Antioxidantien, Lichtschutzmittel, UV-Stabilisatoren, UV-Absorber oder UV-Blocker eingesetzt werden.

Wie schon oben dargelegt wurde, werden die flachen Glasfasern (C) erfindungsgemäß als Schnittglas eingesetzt. Diese Glasfasern weisen Durchmesser der kleinen Querschnittsachse von 3 bis 20 $\mu$m und einen Durchmesser der großen Querschnittsachse von 6 bis 40 $\mu$m auf, wobei das Verhältnis der senkrecht aufeinander stehenden Querschnittsachsen zwischen 2 und 5, bevorzugt zwischen 3 und 4 liegt. Insbesondere werden erfindungsgemäß E-Glasfasern verwendet. Es können aber auch alle anderen Glasfasersorten, wie z. B. A-, C-, D-, M-, S-, R-Glasfasern oder beliebige Mischungen davon oder Mischungen mit E-Glasfasern eingesetzt werden. Es werden die für Polyamid üblichen Schlichten, wie z. B. diverse Aminosilanschlichten, verwendet.

Die Herstellung der erfindungsgemäßen Polyamidformmassen kann auf üblichen Compoundiermaschinen, wie z. B. ein- oder zweiwelligen Extrudern oder Schneckenknetem erfolgen. In der Regel wird zunächst der polymere Anteil aufgeschmolzen und das Verstärkungsmaterial (Glasfasern) kann an der gleichen Stelle oder an verschiedenen Stellen des Extruders, z.B. mittels eines Sidefeeders eingetragen werden. Die Compoundierung erfolgt bevorzugt bei eingestellten Zylindertemperaturen von 240°C bis 320°C. Bei schonender Verarbeitung der erfindungsgemässen Formmassen resultieren verstärkte Formteile, bei denen die Faserlängenverteilung deutlich zu höheren Faserlängen verschoben ist. So weisen die erfindungsgemässen Formteile eine im Mittel um 20 bis 200% höhere mittlere Faserlänge im Vergleich zu Formteilen auf Basis von Glasfasern mit rundem Querschnitt auf.

Die aus den erfindungsgemäßen Formmassen hergestellten Formkörper werden zur Herstellung von Innen- und Außenteilen, vorzugsweise mit tragender oder mechanischer Funktion im Bereich Elektro, Möbel, Sport, Maschinenbau, Sanitär und Hygiene, Medizin, Energie- und Antriebstechnik, Automobil und andere Transportmittel oder Gehäusematerial für Geräte und Apparate für die Telekommunikation, Unterhaltungselektronik, Haushaltsapparate, Maschinenbau, Heizungsbereich, oder Befestigungsteile für Installationen oder für Behälter und Lüftungsteile aller Art eingesetzt.

Als mögliche Anwendungen für die aus den erfindungsgemäßen Formmassen hergestellten Formkörpern ist vor allem der Bereich des Metalldruckgussersatz zu nennen, bei dem eine extrem hohe Steifigkeit in Kombination mit einer guten Zähigkeit erwartet wird.

**Anwendungen**

**Bereich Elektrogeräte**

- Anschlag- und/oder Justierelemente für Elektrohandwerkzeuge mit oder ohne integrierten elektrischen Funktionen (moulded interconnect devices, MID)
- Pleuel und/oder Kolben für Bohrhammer in homogener Ausführung, also aus einem Material oder als Hybridteil, also aus einer Materialkombination
- Gehäuse, Getriebegehäuse für Winkelschleifer, Bohrmaschinen, Elektrohobel oder Schleifmaschinen mit oder ohne integrierten elektrischen Funktionen (MID) in homogener Ausführung oder als Hybridteil, wobei bestimmte Funktionsbereiche (z.B. Kraftübertragungsflächen, Gleitflächen, Dekor-Sichtbereiche, Griffbereich) aus einem anderem kompatiblen oder inkompatiblen (z.B. für gezielte Delamination bzw. Deformation, Sollbruchstelle, Kraft- bzw. Drehmomentbegrenzung) Werkstoff sein können.
- Werkzeugaufnahmen, z.B. Futter und/oder Fixierungen
- Nähmaschinengehäuse, Schiebetische mit oder ohne integrierten elektrischen Funktionen (MID)
- Gehäuse oder Gehäuseteile für die Telekommunikation (z.B. Mobiltelefon) und Unterhaltungselektronik

**Bereich Sanitär- und Hygiene**

- Gehäuse und/oder Funktionselemente (z.B. für Pumpen, Getriebe, Ventile) für Mundduschen, Zahnbürsten, Komforttoiletten, Duschzellen, Hygienecenter mit oder ohne integrierten elektrischen Funktionen (MID) in homogener Ausführung oder als Hybridteil
- diverse Konnektoren oder Anschlussmodule
- Pumpengehäuse, Ventilgehäuse oder Wasserzählergehäuse mit oder ohne integrierten elektrischen Funktionen (MID) in homogener Ausführung oder als Hybridteil.

**Bereich Haushaltsgeräte**

Gehäuse und/oder Funktionselemente für mechanische, elektrische oder elektro-mechanische Schließsysteme, Verriegelungssysteme oder Sensoren mit oder ohne integrierten elektrischen Funktionen (MID) für

- Kühlschränke, Kühltruhen, Gefriertruhen
- Backöfen, Herde, Dampfgarer
- Geschirrspülmaschinen

**Bereich Automobil**

Gehäuse und/oder Halterungen mit oder ohne integrierten elektrischen Funktionen (MID) in homogener Ausführung oder als Hybridteil für

- Bedienungselemente/Schalter (z.B. für Außenspiegelverstellung, Sitzpositionsverstellung, Beleuchtung, Fahrtrichtungsanzeiger)
- Innensensoren, z.B. für Sitzbelegung
- Außensensoren (z.B. für Einparkhilfen, Abstandsmesser mit Ultraschall bzw. mit Radar)
- Sensoren im Motorraum (z.B. Schwingungs- bzw. Klopfsensoren)
- Innen- und Außenbeleuchtung.
- Motoren und/oder Antriebselemente im Innen und Außenbereich (z.B. für Sitzkomfortfunktionen, Außenrückspiegelverstellung, Hauptscheinwerferverstellung und/oder Nachführung, Kurvenlicht)
- Kontroll- und/oder Steuerungssysteme für den Fahrzeugantrieb (z.B. für Medienführung und/oder Regelung von z.B. Treibstoff, Luft, Kühlmittel, Schmiermittel) Mechanische Funktionselemente und/oder Sensorengehäuse mit oder ohne integrierten elektrischen Funktionen (MID) für
- Schließsysteme, Verriegelungen, Zuziehsysteme, z.B. bei Fahrzeugschwenktüren, Schiebetüren, Motorraumklappen bzw. -hauben, Heckklappen, Fahrzeugfenstern

- Konnektoren für Fluidleitungen, Konnektoren im Bereich der Autoelektrik und -elektronik

**Bereich Maschinenbau**

- ISO-Normteile und/oder Maschinenelemente (z.B. Schrauben, Muttern, Bolzen, Keile, Wellen, Zahnräder) in Normmassen oder anwendungsspezifischem Design oder homogener Ausführung
- ISO-Normteile und/oder Maschinenelemente, wie z.B. Schrauben, Muttern, Bolzen, Keile, Wellen in Normmassen oder anwendungsspezifischem Design oder als Hybridteil, wobei bestimmte Funktionsbereiche, wie z.B. Kraftübertragungsflächen, Gleitflächen, Dekor-Sichtbereiche aus einem anderem kompatiblen oder inkompatiblen (z.B. für gezielte Delamination, Sollbruchstelle, Kraft/Drehmomentbegrenzung) Werkstoff sein können.
- Ständer, Standfüße, Sockel für Bearbeitungsmaschinen, wie z.B. Standbohrmaschinen, Tischbohrmaschinen, Fräsmaschinen oder Kombimaschinen für Metall- und/oder Holzbearbeitung
- Insertteile, z.B. Gewindebüchsen
- Selbstfurchende Schrauben

**Bereich Energie- und Antriebstechnik:**

- Rahmen, Gehäuse, Trägerteile (Substrat) und/oder Befestigungselemente für Solarzellen mit oder ohne integrierten elektrischen Funktionen (MID) in homogener Ausführung oder als Hybridteil.
- Nachführ- und/oder Justierelemente (z.B. für Lager, Scharniere, Gelenke, Zugstangen, Stossstangen) für Kollektoren.
- Pumpengehäuse und/oder Ventilgehäuse mit oder ohne integrierten elektrischen Funktionen (MID) in homogener Ausführung oder als Hybridteil.

**Bereich Medizinalequipment**

- Rahmen, Gehäuse, Trägerteile mit oder ohne integrierten elektrischen Funktionen (MID) in homogener Ausführung oder als Hybridteil für Überwachungsgeräte und/oder Equipment zur Unterstützung der Lebensfunktionen.
- Einwegbestecke, wie z.B. Scheren, Klemmen, Zangen, Messergriffe in homogener Ausführung oder als Hybridteil
- Konstruktionen zur kurzzeitigen bzw. notfallmässigen Fixierung von Frakturen in homogener Ausführung oder als Hybridteil
- Gehhilfen mit oder ohne integrierten elektrischen Funktionen (MID) und/oder Sensoren zur Belastungskontrolle in homogener Ausführung oder als Hybridteil.

Die folgenden Beispiele und Figuren sollen die Erfindung erläutern, ohne sie jedoch einzuschränken.
Die Figuren zeigen:

Figur 1 zeigt einen Spritzgusskörper für die Verzugsmessung. Die Bestimmung des Verzugs erfolgt an diesem Spritzgusskörper gemäß Figur 1. Der Anguss erfolgt von unten in z-Richtung.

Figur 2 zeigt die Lage der Messpunkte im Spritzgusskörper in x-Richtung für die Verzugsmessung;

Figur 3 zeigt die Lage der Messpunkte im Spritzgusskörper in z-Richtung für die Verzugsmessung;

Figur 4 zeigt den Verzug der Messpunkte 7 bis 9 (vergleiche Figur 2) in x-Richtung;

Figur 5 zeigt den Verzug der Messpunkte 10 bis 12 in x-Richtung;

Figur 6 zeigt den Verzug der Messpunkte 13 bis 15 in z-Richtung;

Figur 7 zeigt den Verzug der Messpunkte 19 bis 21 in z-Richtung.

**Beispiele**

In den Beispielen und Vergleichsbeispielen wurden nachfolgend genannte Materialien verwendet:

PA Typ A:        Polyamid-12 mit einem $M_n$ von ca. 17.000 g/mol ($\eta_{rel}$ = 1,66), EMS-CHEMIE AG, Schweiz
PA Typ B:        Polyamid MACM12 mit $\eta_{rel}$= 1,75, Tg = 155°C, $\Delta$H<1J/g, EMS-CHEMIE AG, Schweiz
PA Typ C:        Polyamid-66 mit $\eta_{rel}$ = 1,82, RADICI, Italien
PA Typ D:        Polyamid 6I6T (70:30) mit $\eta_{rel}$ = 1,52, Tg = 125°C, $\Delta$H<1J/g, EMS-CHEMIE AG, Schweiz
Glasfasern Typ A:   NITTOBO CSG3PA-820, 3 mm lang, 28 $\mu$m breit, 7 $\mu$m dick, Aminosilanschlichte, NITTO BOSEKI, Japan (flache Glasfasern, erfindungsgemäß)
Glasfasern Typ B:   CS 7928, 4,5 mm lang, 10 $\mu$m Durchmesser, BAYER AG, Deutschland (Glasfasern mit kreisförmigem Querschnitt, Stand der Technik)

Die Formmassen der Zusammensetzungen in Tabelle 1 werden auf einen Zweiwellenextruder der Fa. Werner u. Pfleiderer Typ ZSK25 hergestellt. Die Granulate PA 12 werden in die Einzugszone dosiert. Die Glasfaser wird über einen Sidefeeder 3 Gehäuseeinheiten vor der Düse in die Polymerschmelze dosiert.

Die Gehäusetemperatur wurde als aufsteigendes Profil bis 300°C eingestellt. Bei 150 bis 200 upm wurden 10 kg Durchsatz erreicht. Nach Abkühlen der Stränge im Wasserbad wurden nach Granulierung und Trocknung bei 110°C für 24h die Granulateigenschaften gemessen.

Die Prüfkörper wurden auf einer Arburg Spritzgießanlage hergestellt, wobei die Zylindertemperaturen von 240°C bis 300°C und eine Scheckenumfangsgeschwindigkeit von 15 m/min eingestellt wurden. Die Formtemperatur wurde mit 80 - 100°C gewählt.

Die Messungen wurden nach folgenden Normen und an folgenden Prüfkörpers durchgeführt.

Zug-E-Modul:

ISO 527 mit einer Zuggeschwindigkeit von 1 mm/min
ISO-Zugstab , Norm: ISO/CD 3167, Typ A1, 170 x 20/10 x 4 mm, Temperatur 23 °C

Reißfestigkeit und Reißdehnung:

ISO 527 mit einer Zuggeschwindigkeit von 5 mm/min
ISO-Zugstab , Norm: ISO/CD 3167, Typ A1, 170 x 20/10 x 4 mm, Temperatur 23 °C

Schlagzähigkeit nach Charpy:

ISO 179/*eU
ISO-Prüfstab, Norm: ISO/CD 3167, Typ B1, 80 x 10 x 4 mm, Temperatur 23 °C

* 1 = nicht instrumentiert, 2 = instrumentiert
Kerbschlagzähigkeit nach Charpy:

ISO 179/*eA
ISO-Prüfstab, Norm: ISO/CD 3167, Typ B1, 80 x 10 x 4 mm, Temperatur 23 °C

* 1 = nicht instrumentiert, 2 = instrumentiert
Glasumwandlungstemperatur (Tg), Schmelzenthalpie ($\Delta$H)

ISO-Norm 11357-1/-2
Granulat

Die Differential Scanning Calorimetry (DSC) wurde mit Aufheizrate von 20 °C/min durchgeführt. Angegeben wird die Temperatur für den Onset (Tg).

Relative Viskosität:
DIN EN ISO 307, in 0,5 Gew.-%-iger m-Kresollösung, Temperatur 20 °C

MVR: (Melt volume rate)
nach ISO 1133 bei 275°C und einer Belastung von 5 kg

Fließlänge:

Die Fließlängen wurden mittels einer Arburg-Spritzgussmaschine (Typ: ARBURG - ALLROUNDER 320-210-750) bestimmt. Es wurden Fließspiralen der Dimension 1,5mm x 10 mm bei einer Massetemperatur von 278°C (290°C) und einer Formtemperatur von 80°C (100°C) angefertigt.

Glanz:

Die Glanzmessung erfolgte nach ISO2813 mit einem Glanzmessgerät Multi Gloss 268 von Minolta

Der Glasfasergehalt wird mittels TGA am Granulat bestimmt. Dazu wird eine Probe von etwa 10 mg mit einer Aufheizrate von 20K/min auf 800°C aufgeheizt. Ab 600°C wird das Spülmedium Stickstoff durch Luft ersetzt. Die verbleibende Menge entspricht dem Glasanteil.

Wenn in der Tabelle nicht anders vermerkt, werden die Prüfkörper im trockenen Zustand verwendet. Dazu werden die Prüfkörper nach dem Spritzguss mindestens 48 h bei Raumtemperatur in trockener Umgebung gelagert.

**Tabelle 1**

| Beispiel | | 1 | VB1 | 2 | VB2 | 3 | VB3 |
|---|---|---|---|---|---|---|---|
| *Zusammensetzung* | | | | | | | |
| PA Typ A | Gew.-% | 50 | 50 | 35 | 35 | 25 | 25 |
| PA Typ B | Gew.-% | 0 | 0 | 0 | 0 | 10 | 10 |
| Glasfasern Typ A | Gew.-% | 50 | 0 | 65 | 0 | 65 | 0 |
| Glasfasern Typ B | Gew.-% | 0 | 50 | 0 | 65 | 0 | 65 |
| *Eigenschaften* | | | | | | | |
| MVR (275°C/5kg) | cm$^3$/10min | 77 | 65 | 45 | 15 | 25 | 17 |
| Glasfasergehalt | Gew.-% | 49,3 | 49,6 | 64,6 | 64,9 | 65,0 | 64,9 |
| Zug-E-Modul | MPa | 13200 | 12700 | 19800 | 19000 | 20500 | 19400 |
| Reissfestigkeit | MPa | 180 | 165 | 213 | 183 | 220 | 188 |
| Reissdehnung | % | 3,3 | 4,2 | 2,5 | 3,5 | 2,7 | 3,4 |
| Schlagzähigkeit Charpy new, 23°C | kJ/m$^2$ | 98 | 90 | 96 | 60 | 105 | 72 |
| Kerbschlagzähigkeit Charpy new, 23°C | kJ/m$^2$ kJ/m$^2$ | 29 | 22 | 32 | 17 | 34 | 18 |
| Glanz unter 85° | % | 96 | 89 | 94 | 83 | 95 | 85 |
| Fliesslänge (278°C/80°C) | mm | 345 | 280 | 244 | 189 | 250 | 185 |

Die folgenden Beispiele sollen die Vorteile der erfindungsgemässen Formmasse hinsichtlich der verbesserten Querfestigkeit und Quersteifigkeit aufzeigen.

Um die Steifigkeit und Festigkeit längs und quer zum Anguss zu bestimmen, wurden Probekörper der Dimension 10x100x2 mm verwendet. Diese wurden jeweils aus der Mitte von Platten der Dimension 100x100x2 mm (mit Filmanguss) herausgetrennt. Die Platten wurden aus den Formmassen der Beispiele 2 (flache Glasfasern: erfindungsgemäß) und VB2 (Glasfasern mit rundem Querschnitt) gefertigt.

**Tabelle 2:** Beispiele 2a und Vergleichsbeispiel VB2a

| Beispiel | | 2a | VB2a |
|---|---|---|---|
| Zug-E-Modul längs | MPa | 12900 | 12550 |
| Zug-E-Modul quer | MPa | 9170 | 6480 |
| Verhältnis Zug-E-Modul quer/längs | | 0,71 | 0,52 |
| Reissfestigkeit längs | MPa | 139 | 124 |
| Reissfestigkeit quer | MPa | 70 | 58 |
| Verhältnis Reissfestigkeit quer/längs | | 0,50 | 0,47 |

Gegenüber der Formmasse mit runden Glasfasern zeigt die erfindungsgemässe Formmasse (Beispiel 2a) eine um über 40% erhöhte Quersteifigkeit und eine um 20% erhöhte Querfestigkeit.

**Tabelle 3: Beispiel 4 und Vergleichsbeispiel 4**

| Beispiel | | 4 | VB4 |
|---|---|---|---|
| PA Typ C | Gew.-% | 37,5 | 37,5 |
| PA Typ D | Gew.-% | 12,5 | 12,5 |
| Glasfasern Typ A | Gew.-% | 50 | 0 |
| Glasfasern Typ B | Gew.-% | 0 | 50 |
| MVR (275°C/5kg) | cm$^3$/10min | 95 | 75 |
| Glasfasergehalt | Gew.-% | 49,5 | 49,7 |
| Zug-E-Modul längs | MPa | 15870 | 13830 |
| Zug-E-Modul quer | MPa | 9314 | 6920 |
| Verhältnis Zug-E-Modul quer/längs | | 0,58 | 0,50 |
| Reissfestigkeit längs | MPa | 204 | 184 |
| Reissfestigkeit quer | MPa | 134 | 110 |
| Verhältnis Reissfestigkeit quer/längs | | 0,66 | 0,58 |
| Schlagzähigkeit Charpy new, 23°C | kJ/m$^2$ | 75 | 70 |
| Kerbschlagzähigkeit Charpy new, 23°C | kJ/m$^2$ kJ/m$^2$ | 25 | 17 |
| Fliesslänge (Massetemperatur : 290°C, Formtemperatur: 100°C) | mm | 370 | 305 |
| Fülldruck beim Spritzguss (Herstellung Probekörper) | bar | 1000 | 1300 |
| Mittlere Faserlänge im Formteil (BIAX-Probekörper) | μm | 350 | 220 |

Für den Zugversuch wurden spezielle Probekörper (BIAX, publiziert in Noss'Ovra Personalzeitschrift, Dezember 2006, Nr. 12, 29. Jahrgang, EMS-CHEMIE AG) verwendet, die die richtungsabhängige Messung der Steifigkeit und Festigkeit erlaubt.

Aus dem Vergleich von Beispiel 4 (erfindungsgemäß) mit Vergleichsbeispiel 4 ergibt sich, dass durch Kombination von flachen Glasfasern mit der erfindungsgemässen niederviskosen Polyamidformmasse die Quersteifigkeit um über 10% und die Querfestigkeit um über 20% verbessert werden konnte.

Nach Veraschen der Probekörper wurde die Längenverteilung der Glasfasern sowie die mittlere Faserlänge bestimmt. Die erfindungsgemässen Formkörper enthielten Glasfasern mit einer deutlich erhöhten Faserlänge.

Bei der Herstellung der Probekörper durch Spritzgiessen fällt ein weiterer Vorteil der erfindungsgemässen Formmassen auf, der gegenüber üblichen mit runden Glasfaser verstärkten Formmassen deutlich reduzierte Fülldruck. Die Kombination von tiefviskosen Polyamiden und flachen Glasfasern ermöglicht die Herstellung von Spritzgussteilen mit einem um 20 - 30% niedrigeren Fülldruck.

Die Bestimmung des Verzugs erfolgt gemäß der folgenden Vorschrift:

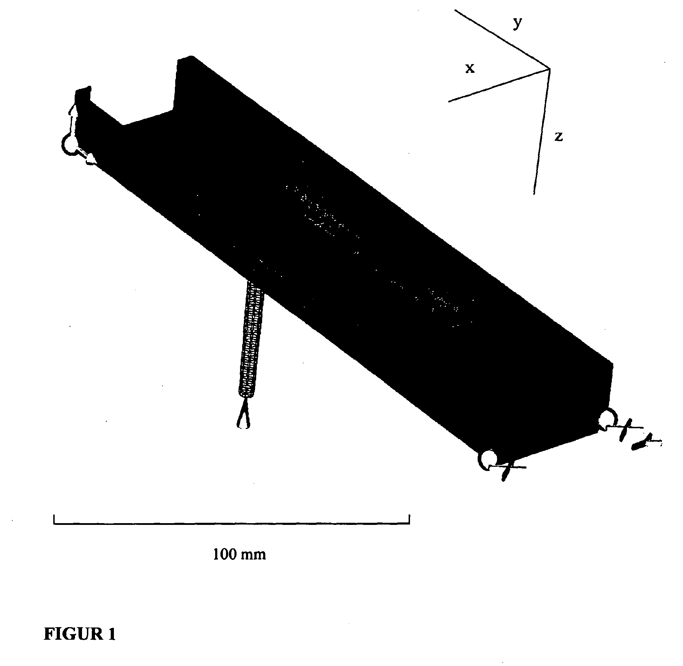

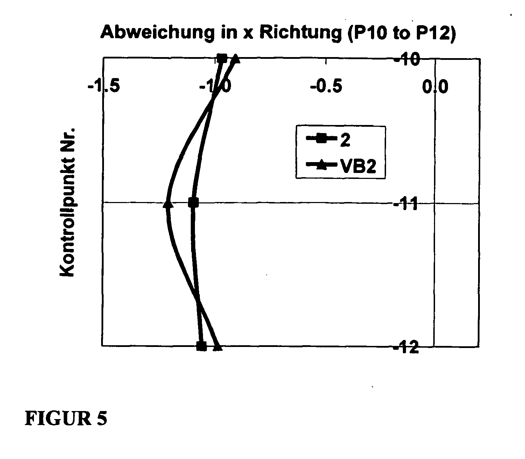

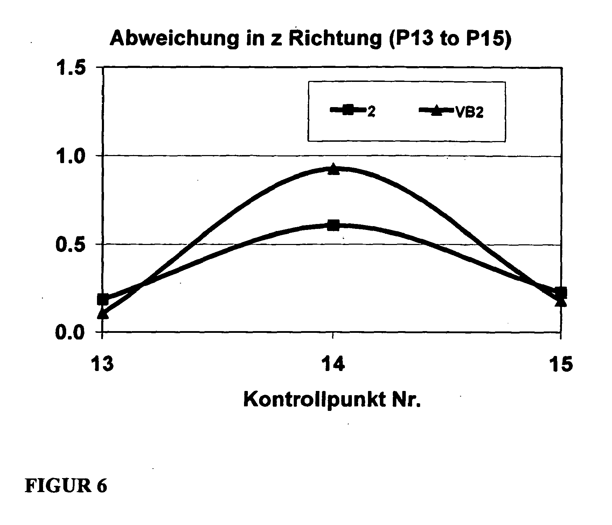

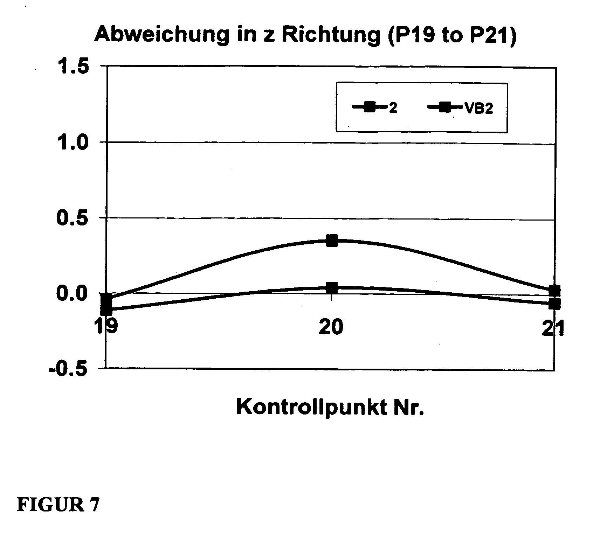

Verzugsmessung (siehe Figuren 1 bis 7)

Die Bestimmung des Verzugs erfolgt mit einem Spritzgusskörper gemäss Figur 1. Der Anguss erfolgt von unten in z-Richtung. Die Spritzgusskörper wurden mit 280°C Masse- und 80°C Formtemperatur hergestellt.

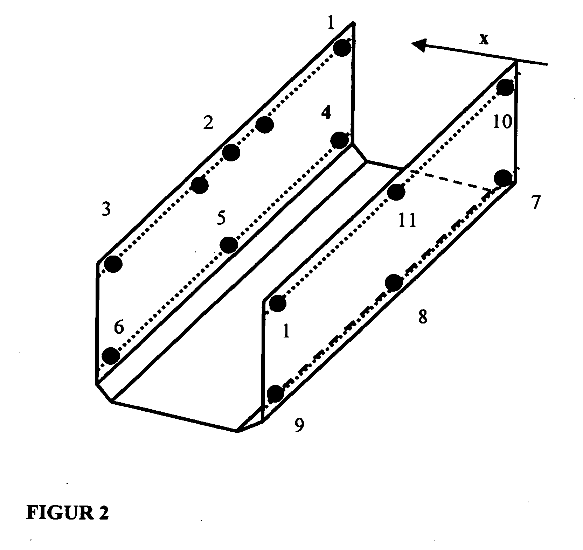

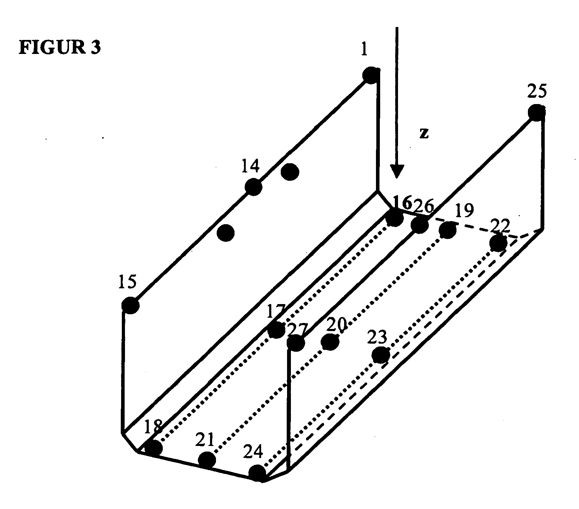

Mit einem Koordinatenmessgerät der Marke Tesa Validator 10 werden die Positionen 1 bis 12 in x-Richtung in Bezug zu Punkt 4 und in z-Richtung die Positionen 13 bis 27 in Bezug zu Punkt 16 bestimmt (siehe Figuren 2 und 3).

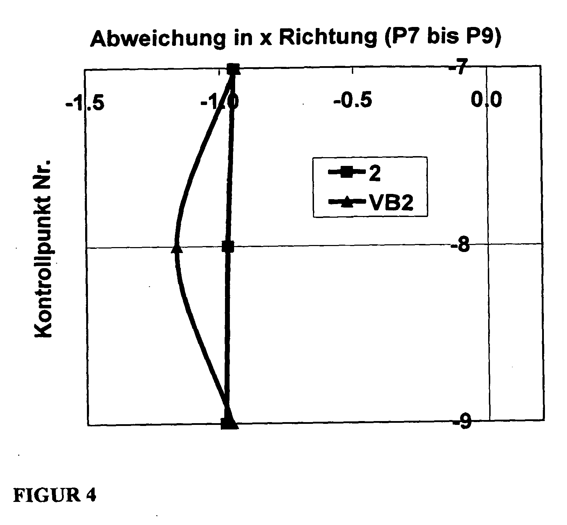

Diese Positionsabweichungen werden für die einzelnen Positionen aufgetragen und sind in den Abbildungen 4 bis 7 zu finden.

Im Fall des Spritzgusskörpers mit flachen Glasfasern wird über alle Messpunkte hinweg ein merklich isotroperes Verhalten hinsichtlich der Formhaltung und damit ein im Mittel deutlich geringerer Verzug beobachtet.

**Patentansprüche**

1. Verstärkte Polyamidformmassen mit hoher Kerbschlagzähigkeit, enthaltend tiefviskose Polyamide und flache Glasfasern als ein verstärkendes Medium, **gekennzeichnet durch**

   - eine Polyamidmatrix, enthaltend folgende Komponenten:

   (A) 0 bis 60 Gew.-% mindestens eines aliphatischen, teilkristallinen Polyamids mit einer Lösungsviskosität, gemessen in m-Kresol (0,5 Gew.-%), von $\eta_{rel}$ kleiner 1,9,
   (B) 0 bis 60 Gew.-% wenigstens eines amorphen oder mikrokristallinen Polyamids auf Basis von aliphatischen, cycloaliphatischen oder aromatischen Diaminen, Dicarbonsäuren, Lactamen und/oder Aminocarbonsäuren, bevorzugt mit 6 bis 36 Kohlenstoffatomen, oder eine Mischung solcher Homopolyamide und/oder Copolyamide,
   wobei die Komponenten (A) und (B) die Bedingungen erfüllen:

   $$(A) + (B) = 20 \text{ bis } 60 \text{ Gew.-\%}$$

   und dass, im Falle eines Gemisches der Komponenten (A) und (B), im Gemisch mindestens 50 Gewichtsteile aliphatischer Bausteine (A) vorliegen, und

   - eine Füllstoffkomponente, enthaltend:

   (C) 40 bis 80 Gew.-% flache Glasfasern mit länglicher Gestalt, wobei die Glasfasern eine nicht kreisförmige Querschnittsfläche und ein Abmessungsverhältnis von der Haupt-Querschnittsachse zur Neben-Querschnittsachse von zwischen 2 bis 5, insbesondere von zwischen 3 und 4 aufweisen, und
   (D) 0 bis 40 Gew.-% teilchen- oder schichtförmige Füllstoffe,

   - mit der Maßgabe, dass Kohlenstofffasern ausgenommen sind, wobei die Polyamidformmassen gegebenenfalls bis zu 5 Gew.-% weitere übliche Zusatz- und Hilfsstoffe (E) enthalten, und
   - wobei die Gewichtsprozente der Komponenten (A) bis (E) zusammen 100% ergeben.

2. Verstärkte Polyamidformmassen mit hoher Kerbschlagzähigkeit, enthaltend tiefviskose Polyamide und flache Glasfasern als ein verstärkendes Medium, **gekennzeichnet durch**

   - eine Polyamidmatrix, enthaltend folgende Komponenten:

   (A) 20 bis 60 Gew.-% mindestens eines aliphatischen, teilkristallinen Polyamids mit einer Lösungsviskosität, gemessen in m-Kresol (0,5 Gew.-%), von $\eta_{rel}$ kleiner 1,9,
   (B) 0 bis 50 Gew.-%, bevorzugt 0 bis 20 Gew.-%, ganz besonders bevorzugt 0 bis 15 Gew.-%, wenigstens eines amorphen oder mikrokristallinen Polyamids auf Basis von aliphatischen, cycloaliphatischen oder aromatischen Diaminen, Dicarbonsäuren, Lactamen und/oder Aminocarbonsäuren, bevorzugt mit 6 bis 36 Kohlenstoffatomen, oder eine Mischung solcher Homopolyamide und/oder Copolyamide,
   mit der Maßgabe, dass im Falle eines Gemisches der Komponenten (A) und (B), im Gemisch mindestens 50 Gewichtsteile aliphatischer Bausteine (A) vorliegen, und

   - eine Füllstoffkomponente, enthaltend:

   (C) 40 bis 80 Gew.-% flache Glasfasern mit länglicher Gestalt, wobei die Glasfasern eine nicht kreisförmige Querschnittsfläche und ein Abmessungsverhältnis von der Haupt-Querschnittsachse zur Neben-Querschnittsachse von zwischen 2 bis 5, insbesondere von zwischen 3 und 4 aufweisen, und
   (D) 0 bis 40 Gew.-% teilchen- oder schichtförmige Füllstoffe,

   - mit der Maßgabe, dass Carbon- bzw. Kohlenstofffasern ausgenommen sind, wobei die Polyamidformmassen gegebenenfalls bis zu 5 Gew.-% weitere übliche Zusatz- und Hilfsstoffe (E) enthalten, und
   - wobei die Gewichtsprozente der Komponenten (A) bis (E) zusammen 100% ergeben.

3. Polyamidformmassen gemäß Anspruch 1 oder 2, **dadurch gekennzeichnet, dass** die flachen Glasfasern in Form von Schnittglas mit einer Länge von 2 bis 50 mm vorliegen.

4. Polyamidformmassen gemäß Anspruch 1 oder 3, **dadurch gekennzeichnet, dass** die flachen Glasfasern in Konzentrationen von zwischen 50 und 70 Gew.-% in den Formmassen enthalten sind.

5. Polyamidformmassen gemäß einem der Ansprüche 1 bis 4, **dadurch gekennzeichnet, dass** die als Schnittglas eingesetzten flachen Glasfasern einen Durchmesser der Haupt-Querschnittsachse von 6 bis 40 $\mu$m aufweisen und einen Durchmesser der Neben-Querschnittsachse von 3 bis 20 $\mu$m aufweisen, wobei das Verhältnis der senkrecht aufeinander stehenden Querschnittsachse zwischen 2 und 5, bevorzugt zwischen 3 und 4 liegt.

6. Polyamidformmassen gemäß einem der vorhergehenden Ansprüche 1 bis 5, **dadurch gekennzeichnet, dass** die flachen Glasfasern ausgewählt werden aus E-Glasfasern, A-Glasfasern, C-Glasfasern, D-Glasfasern, M-Glasfasern, S-Glasfasern oder R-Glasfasern oder Mischungen davon, wobei E-Glasfasern bevorzugt sind, und wobei besonders bevorzugt die Fasern mit einer Amino- oder Epoxysilanbeschichtung versehen sind.

7. Polyamidformmassen gemäß einem der vorhergehenden Ansprüche 1 bis 6, **dadurch gekennzeichnet, dass** das wenigstens eine aliphatische, teilkristalline Polyamid von Komponente (A) eine Lösungsviskosität, gemessen in m-Kresol (0,5 Gew.-%) von $\eta_{rel}$ kleiner 1,8, insbesondere von $\eta_{rel}$ kleiner 1,7 aufweist.

8. Polyamidformmassen gemäß einem der vorhergehenden Ansprüche 1 bis 7, **dadurch gekennzeichnet, dass** das wenigstens eine aliphatische, teilkristalline Polyamid von Komponente (A) ausgewählt ist aus der Gruppe, bestehend aus Polyamid 6, Polyamid 46, Polyamid 66, Polyamid 11, Polyamid 12, Polyamid 1212, Polyamid 1010, Polyamid 1012, Polyamid 1112, Polyamid 610, Polyamid 612, Polyamid 69, Polyamid 810 oder deren Gemische, Blends oder Legierungen.

9. Polyamidformmassen gemäß einem der vorhergehenden Ansprüche 1 bis 8, **dadurch gekennzeichnet, dass** das wenigstens eine amorphe oder mikrokristalline Polyamid ausgewählt ist aus der Gruppe der Homo- und/oder Copolyamide auf Basis von PA 6I, PA 6I/6T, PA MXDI/6I, PA MXDI/MXDT/6I/6T, PA MXDI/12I, PA MXDI, PA MACM 9-18, PA MACMI/12, PA MACMI/MACMT/12, PA6I/MACMI/12, PA 6I/6T/MACMI/MACMT, PA 6I/6T/MACMI/MACMT/12, PA MACM6/11, PA MACMI/MACM12, wobei MACM zu mehr als 55 Mol-%, insbesondere zu mehr als 60 Mol-% durch PACM ersetzt sein kann, wobei PA 6I/6T besonders bevorzugt ist.

10. Polyamidformmassen gemäß einem der vorhergehenden Ansprüche 1 bis 9, **dadurch gekennzeichnet, dass** die Förmmassen Kerbschlagzähigkeiten von mindestens 30 kJ/m$^2$ (gemessen nach Charpy bei 23°C gemäß ISO 179/2-1 eA) bei einem Glasfaseranteil $\geq$ 60 Gew.-% oder eine Kerbschlagzähigkeit von über 25 kJ/m$^2$ (gemessen nach Charpy bei 23°C gemäß ISO 179/2-1 eA) bei einem Glasfaseranteil von 50 bis 60 Gew.-% aufweisen.

11. Polyamidformmassen gemäß einem der vorhergehenden Ansprüche 1 bis 10, **gekennzeichnet durch** eine hohe Fliesslänge, insbesondere bei aus den Formmassen hergestellten, dünnwandigen Spritzgussteilen von > 200 mm bei Verstärkungsgraden mit Komponente (C) von über 40 Gew.-%.

12. Polyamidformmassen gemäß einem der vorhergehenden Ansprüche 1 bis 11, **dadurch gekennzeichnet, dass** als weitere übliche Zusatz- und Hilfsstoffe (E) in den Formmassen solche aus der Gruppe der anorganischen Stabilisatoren, organischen Stabilisatoren, Gleitmittel, Farbstoffe, metallischen Pigmente, Metallflitter, metallbeschichteten Partikel, halogenhaltigen Flammschutzmitteln, halogenfreien Flammschutzmitteln, Schlagzähmodifikatoren, Antistatika, Leitfähigkeitsadditive, insbesondere Ruß und/oder Kohlenstoffnanoröhrchen, Entformungsmittel, optischen Aufhellern, natürlichen Schichtsilikaten, synthetischen Schichtsilikaten oder Gemischen der vorgenannten Zusatzstoffe enthalten sind.

13. Verfahren zur Herstellung der Polyamidformmassen gemäß irgendeinem der vorhergehenden Ansprüche 1 bis 12, auf üblichen Compoundieranlagen bei eingestellten Zylindertemperaturen von 240°C bis 320°C, wobei man zunächst den polymeren Anteil aufschmilzt und dann die geschnittenen flachen Glasfasern und/oder die anderen Füllstoffe einträgt.

14. Verfahren zur Herstellung der Polyamidformmassen gemäß irgendeinem der vorhergehenden Ansprüche 1 bis 12, **dadurch gekennzeichnet, dass** man zunächst aus den Komponenten (A) und/oder (B) und den Füllstoffen (C) und gegebenenfalls (D) gegebenenfalls den Zusatzstoffen (E) jeweils ein Compound in Granulatform herstellt und diese Granulate anschließend vermischt und dann gegebenenfalls noch weitere Granulatmengen von den Komponenten (A) und gegebenenfalls (B) hinzugegeben werden und man dann die Granulate weiterverarbeitet.

15. Verwendung der Formmassen gemäß einem der Ansprüche 1 bis 14 mit Kerbschlagzähigkeiten von über 25 kJ/m$^2$ (gemessen nach Charpy bei 23°C, gemäß ISO 179/2-1 eA) zur Herstellung von Formkörpern, insbesondere von Spritzgussteilen.

16. Verfahren zur Herstellung von Formkörpern aus den Polyamidformmassen gemäß einem der Ansprüche 1 bis 12 durch Spritzguss, Extrusion, Pultrusion, Spritzblasen oder anderen Verformungstechniken, wobei Spritzguss besonders bevorzugt ist.

17. Formkörper, insbesondere Spritzgussteil, erhältlich aus den Polyamidformmassen gemäß einem oder mehreren der Ansprüche 1 bis 12.

18. Formkörper gemäß Anspruch 17, **dadurch gekennzeichnet, dass** es ein Mobiltelefongehäuse oder ein Mobiltelefongehäuseteil ist.

**Claims**

1. Reinforced polyamide molding materials with high notch impact strength, comprising low viscous polyamides and flat glass fibers as a reinforcing medium, **characterized by**

   - a polyamide matrix, comprising the following components:

     (A) 0 to 60 wt.-% of at least one aliphatic, partly crystalline polyamide with a solution viscosity, measured in m-cresol (0.5 wt-%), of $\eta_{rel}$ less than 1.9,
     (B) 0 to 60 wt.-% of at least one amorphous or microcrystalline polyamide based on aliphatic, cycloaliphatic or aromatic diamines, dicarboxylic acids, lactams and/or aminocarboxylic acids, preferably with 6 to 36 carbon atoms, or a mixture of such homopolyamides and/or copolyamides,

     wherein the components (A) and (B) fulfill the condition:

$$(A) + (B) = 20 \text{ to } 60 \text{ wt.-\%}$$

     and that, in the case of a mixture of components (A) and (B), at least 50 weight parts aliphatic blocks (A) are present in the mixture, and
     - a filler component, comprising:

     (C) 40 to 80 wt.-% flat glass fibers with elongated shape, and the glass fibers have a non-circular cross-sectional area and a size ratio of the main cross-sectional axis to the secondary cross-sectional axis of between 2 to 5, particularly between 3 and 4, and
     (D) 0 to 40 wt.-% particle like or layer like fillers,

     - with the prerequisite that carbon fibers are excluded, wherein the polyamide molding materials optionally comprise up to 5 wt.-% of further usual additives and auxiliary agents (E), and
     - wherein the weight of the components (A) to (E) sums up to 100%.

2. Reinforced polyamide molding materials with a high notch impact strength, comprising low viscous polyamides and flat glass fibers as a reinforcing medium, **characterized by**

   - a polyamide matrix, comprising the following components:

     (A) 20 to 60% by weight of at least one aliphatic, partly crystalline polyamide with a solution viscosity, measured in m-cresol (0.5 wt-%), of $\eta_{rel}$ less than 1.9,
     (B) 0 to 50% by weight, preferably 0 to 20 wt.-%, more preferably 0 to 15 wt.-%, of at least one amorphous or microcrystalline polyamides based on aliphatic, cycloaliphatic or aromatic diamines, dicarboxylic acids, lactams , and/or aminocarboxylic acids, preferably with 6 to 36 carbon atoms, or a mixture of such Homo polyamides and/or copolyamides,

with the prerequisite that in the case of a mixture of components (A) and (B), at least 50 weight parts aliphatic blocks (A) are present in the mixture, and
- a filler component, comprising:

(C) 40 to 80 wt.-% flat glass fibers with elongated shape, and the glass fibers have a non-circular cross-sectional area and a size ratio of the main cross-sectional axis to the secondary cross-sectional axis of between 2 to 5, particularly between 3 and 4, and
(D) 0 to 40 wt.-% particle like or layer like fillers,

- with the prerequisite that carbon fibers are excluded, wherein the polyamide molding materials optionally comprise up to 5 wt.-% of further usual additives and auxiliary agents (E), and
- wherein the weight of the components (A) to (E) sums up to 100%.

3. Polyamide molding materials according to claim 1 or 2, **characterized in that** the flat glass fibers have the form of chopped glass strands with a length of 2 to 50 mm.

4. Polyamide molding materials according to claim 1 or 3, **characterized in that** the flat glass fibers are comprised in amounts of between 50 and 70 wt.-% in the molding materials.

5. Polyamide molding materials according to one of the claims 1 to 4, **characterized that** the flat glass fibers, which are added as chopped glass strands, have a diameter of the main cross-sectional axis of 6 to 40 $\mu$m and a diameter of the secondary cross-sectional axis from 3 to 20 $\mu$m, wherein the ratio of the perpendicular cross-sectional axes is between 2 and 5, preferably between 3 and 4.

6. Polyamide molding materials according to one of the preceding claims 1 to 5, **characterized in that** the flat glass fibers are selected from E glass fibers, A glass fibers, C glass fibers, D glass fibers, M glass fibers, S glass fibers or R glass fibers or mixtures thereof, wherein E glass fibers are preferred, and wherein the fibers preferably have an amino coating or epoxy silane coating.

7. Polyamide molding materials according to one of the preceding claims 1 to 6, **characterized in that** at least one aliphatic, partly crystalline polyamide of component (A) has a solution viscosity, measured in m-cresol (0.5 wt.-%), $\eta_{rel}$ less than 1.8, preferably $\eta_{rel}$ less than 1.7.

8. Polyamide molding materials according to one of the preceding claims 1 to 7, **characterized in that** at least one aliphatic, partially from polyamide of component (A) is selected from the group, consisting of polyamide 6, polyamide 46, polyamide 66, polyamide 11, polyamide 12, polyamide 1212, polyamide 1010, polyamide 1012, polyamide 1112, polyamide 610, polyamide 612, polyamide 69, polyamide 810 or their mixtures, blends or alloys.

9. Polyamide molding materials according to one of the preceding claims 1 to 8, **characterized in that** the at least one microcrystalline or amorphous polyamide is selected from the group of homopolyamides and/or copolyamides based on PA 6I, PA 6I/6T, PA MXDI/6I, PA MXDI/MXDT/6I/6T, PA MXDI/12I, PA MXDI, PA MACM 9-18, PA MACMI/ 12, PA MACMI/MACMT/12, PA6I/MACMI/12, PA 6I/6T/MACMI/MACMT, PA 6 I/6T/MACMI/MACMT/12, PA MACM6/11, PA MACMI/MACM12, wherein MACM may be replaced by PACM by more than 55 mol-%, especially by more than 60 mol-%, wherein PA 6I/6T is particularly preferred.

10. Polyamide molding materials according to one of the preceding claims 1 to 9, **characterized in that** the molding materials have notch impact strengths of at least 30 kJ/m$^2$ (measured according to Charpy at 23 °C according to ISO 179/2-1 eA) at a glass fiber percentage $\geq$ 60 wt.-% or a notch impact strength of more than 25 kJ/m$^2$ (measured according to Charpy at 23 °C according to ISO 179/2-1 eA) at a glass fiber percentage of 50 to 60 wt.-%.

11. Polyamide molding materials according to one of the preceding claims 1 to 10, **characterized in** a high flow length, particularly for thin-walled injection-molded parts made from the molding materials, of > 200 mm at reinforcing levels with component (C) of over 40 wt.-%.

**12.** Polyamide molding materials according to one of the preceding claims 1 to 11, **characterized in that** further usual additives and auxiliary agents (E) in the molding material are selected from the group of inorganic stabilizers, organic stabilizers, lubricants, dyes, metallic pigments, metal gewgaw, metal coated particles, halogen-containing flame retardants, halogen-free flame retardants, impact modifiers, antistatics, conductivity additives, particularly carbon black and/or carbon nanotubes, mold releasing agents, optical brighteners, natural sheet silicates, synthetic sheet silicates or mixtures of the above additives.

**13.** Process for the preparation of polyamide molding materials according to any of the preceding claims 1 to 12, using usual compounding machines at barrel temperatures set to 240°C to 320°C, wherein firstly the polymeric part is molten and then chopped flat glass fibers and/or other fillers are added.

**14.** Process for the preparation of polyamide molding materials according to any of the preceding claims 1 to 12, **characterized in that** firstly a compound is respectively produced from the components (A) and/or (B) and the fillers (C) and optionally (D) and optionally the additives (E) in granular form and then these granules are mixed, and then further quantities of granules of the components (A) and (B) are optionally added, and then the granules are processed.

**15.** Use of the molding materials according to one of the claims 1 to 14 with notch impact strengths of more than 25 $kJ/m^2$ (measured according to Charpy at 23°C, according to ISO 179/2-1 eA) for the manufacture of molded parts, especially of injection molded parts.

**16.** Process for the production of molded parts from the polyamide molding materials according to one of the claims 1 to 12 by injection molding, extrusion, pultrusion, blow molding or other molding techniques, wherein injection molding is especially preferred.

**17.** Molded part, particularly injection molded part, obtainable from the polyamide molding materials according to one or more of the claims 1 to 12.

**18.** Molded part according to claim 17, **characterized in that** it is a mobile phone housing or a mobile phone housing part.

**Revendications**

**1.** Matières moulables de polyamide renforcées dotées d'une résilience élevée, contenant des polyamides de faible viscosité et, en tant qu'agent de renforcement, des fibres de verre plates, **caractérisées par**

   - une matrice de polyamide contenant les composants suivantes :

   (A) 0 à 60 % en poids d'au moins un polyamide aliphatique et partiellement cristallin dont la viscosité en solution $\eta_{rel}$ est inférieure à 1,9, mesurée dans du m-crésol (0,5 % en poids),
   (B) 0 à 60 % en poids d'au moins polyamide amorphe ou microcristallin à base de diamines, acides dicarboxyliques, lactames et/ou acides organiques aminés aliphatiques, cycloaliphatiques ou aromatiques, renfermant de préférence 6 à 36 atomes de carbone, ou d'un mélange entre de tels homopolyamides et/ou copolyamides,
   les composants (A) et (B) remplissant les conditions :

$$(A) + (B) = 20 \text{ à } 60 \text{ \% en poids}$$

   et que, dans le cas d'un mélange des composants (A) et (B), la proportion d'unités aliphatiques (A) dans ledit mélange soit d'au moins 50 parts en poids, et

   - un composant servant de charge et contenant :

   (C) 40 à 80 % en poids de fibres de verre plates de forme allongée, lesdites fibres de verre présentant une coupe transversale de forme non-circulaire et un rapport de dimension entre l'axe principal de la coupe transversale et l'axe secondaire de la coupe transversale compris entre 2 et 5, notamment entre 3 et 4, et
(D) 0 à 40 % en poids de charges sous forme de particules ou de feuilles,

- à condition qu'il ne s'agisse pas de fibres en carbone, les matières moulables de polyamide contenant, en outre, le cas échéant jusqu'à 5 % en poids d'additifs et d'agents auxiliaires (E) usuels, et
- la somme des pourcentages en poids des composants (A) à (E) étant de 100 %.

**2.** Matières moulables de polyamide renforcées dotées d'une résilience élevée, contenant des polyamides de faible viscosité et, en tant qu'agent de renforcement, des fibres de verre plates, **caractérisées par**

- une matrice de polyamide contenant les composants suivants :

(A) 20 à 60 % en poids d'au moins un polyamide aliphatique et partiellement cristallin dont la viscosité en solution $\eta_{rel}$ est inférieure à 1,9, mesurée dans du m-crésol (0,5 % en poids),
(B) 0 à 50 % en poids, de préférence 0 à 20 % en poids et notamment 0 à 15 % en poids d'au moins polyamide amorphe ou microcristallin à base de diamines, acides dicarboxyliques, lactames et/ou acides organiques aminés aliphatiques, cycloaliphatiques ou aromatiques, renfermant de préférence 6 à 36 atomes de carbone, ou d'un mélange entre de tels homopolyamides et/ou copolyamides,
à condition que, dans le cas d'un mélange des composants (A) et (B), la proportion d'unités aliphatiques (A) dans ledit mélange soit d'au moins 50 parts en poids, et

- un composant servant de charge et contenant :

(C) 40 à 80 % en poids de fibres de verre plates de forme allongée, lesdites fibres de verre présentant une coupe transversale de forme non-circulaire et un rapport de dimension entre l'axe principal de la coupe transversale et l'axe secondaire de la coupe transversale compris entre 2 et 5, notamment entre 3 et 4, et
(D) 0 à 40 % en poids de charges sous forme de particules ou de feuilles,

- à condition qu'il ne s'agisse pas de fibres en carbone, les matières moulables de polyamide contenant, en outre, le cas échéant jusqu'à 5 % en poids d'additifs et d'agents auxiliaires (E) usuels, et
- la somme des pourcentages en poids des composants (A) à (E) étant de 100 %.

**3.** Matières moulables de polyamide selon les revendications 1 ou 2, **caractérisées en ce que** les fibres de verre plates se présentent sous forme de fibres de verre découpées d'une longueur comprise entre 2 et 50 mm.

**4.** Matières moulables de polyamide selon les revendications 1 ou 3, **caractérisées en ce qu'**elles contiennent les fibres de verre plates dans une concentration comprise entre 50 et 70 % en poids.

**5.** Matières moulables de polyamide selon l'une des revendications 1 à 4, **caractérisées en ce que** les fibres de verre plates mises en oeuvre en tant que fibres de verre découpées présentent un diamètre compris entre 6 et 40 $\mu$m dans le sens de l'axe principal de la coupe transversale et un diamètre compris entre 3 et 20 $\mu$m dans le sens de l'axe secondaire de la coupe transversale, le rapport desdits axes perpendiculaires de la coupe transversale étant compris entre 2 et 5, de préférence entre 3 et 4.

**6.** Matières moulables de polyamide selon l'une des précédentes revendications 1 à 5, **caractérisées en ce que** les fibres de verre plates sont choisies parmi les fibres de verre de type E, les fibres de verre de type A, les fibres de verre de type C, les fibres de verre de type D, les fibres de verre de type M, les fibres de verre de type S, les fibres de verre de type R ou leurs mélanges, les fibres de verre de type E étant préférées, s'agissant notamment de fibres pourvues d'un revêtement de type amino- ou époxysilane.

**7.** Matières moulables de polyamide selon l'une des précédentes revendications 1 à 6, **caractérisées en ce que** l'au moins un polyamide aliphatique et partiellement cristallin du composant (A) présente une viscosité en solution $\eta_{rel}$ inférieure à 1,8, notamment inférieure à 1,7, mesurée dans du m-crésol (0,5 % en poids).

**8.** Matières moulables de polyamide selon l'une des précédentes revendications 1 à 7, **caractérisées en ce que** l'au moins un polyamide aliphatique et partiellement cristallin du composant (A) est choisi dans le groupe constitué par le polyamide 6, le polyamide 46, le polyamide 66, le polyamide 11, le polyamide 12, le polyamide 1212, le polyamide 1010, le polyamide 1012, le polyamide 1112, le polyamide 610, le polyamide 612, le polyamide 69, le polyamide 810 ou par leurs mélanges, mélanges homogènes ou alliages.

9. Matières moulables de polyamide selon l'une des précédentes revendications 1 à 8, **caractérisées en ce que** l'au moins un polyamide amorphe ou microcristallin est choisi dans le groupe constitué par les homo- et/ou copolyamides à base de PA 6I, PA 6I/6T, PA MXDI/6I, PA MXDI/MXDT/6I/6T, PA MXDI/12I, PA MXDI, PA MACM 9-18, PA MACMI/12, PA MACMI/MACMT/12, PA6I/MACMI/12, PA 6I/6T/MACMI/MACMT, PA 6I/6T/MACMI/MACMT/12, PA MACM6/11, PA MACMI/MACM12, le MACM pouvant être remplacé à plus de 55 % molaires, notamment à plus de 60 % molaires, par le PACM, le PA 6I/6T étant particulièrement préféré.

10. Matières moulables de polyamide selon l'une des précédentes revendications 1 à 9, **caractérisées en ce qu'**elles présentent des valeurs de résilience d'au moins 30 kJ/m$^2$ (mesurées selon Charpy à 23 °C, conformément à la norme ISO 179/2-1 eA) si leur teneur en fibres de verre est $\geq$ 60 % en poids ou une résilience d'au moins 25 kJ/m$^2$ (mesurées selon Charpy à 23 °C, conformément à la norme ISO 179/2-1 eA) si leur teneur en fibres de verre est comprise entre 50 et 60 % poids.

11. Matières moulables de polyamide selon l'une des précédentes revendications 1 à 10, **caractérisées par** une longueur d'écoulement élevée, notamment lorsqu'on produit, en moulage par injection, des pièces mesurant > 200 mm et dotées d'une paroi mince, le degré de renforcement par le composant (C) étant supérieur à 40 % en poids.

12. Matières moulables de polyamide selon l'une des précédentes revendications 1 à 11, **caractérisées en ce qu'**elles contiennent, en outre, comme additifs usuels (E) ceux qui sont choisis dans le groupe constitué par les agents stabilisants inorganiques, les agents stabilisants organiques, les lubrifiants, les colorants, les pigments métalliques, les paillettes métalliques, les particules dotées d'un revêtement métallique, les ignifugeants halogénés, les ignifugeants non-halogénés, les agents modificateurs de résilience, les agents antistatiques, les additifs de conductivité, s'agissant notamment de noir de carbone et/ou de nanotubes de carbone, les agents de démoulage, les agents azurants, les phyllosilicates naturels, les phyllosilicates synthétiques et les mélanges desdits additifs.

13. Procédé de préparation de matières moulables de polyamide selon l'une quelconque des précédentes revendications 1 à 12 sur des installations de compoundage usuelles, les températures de cylindre étant réglées à 240 °C à 320 °C, une première étape consistant à faire fondre la partie polymère pour ensuite y incorporer les fibres de verre plates découpées et/ou les autres charges.

14. Procédé de préparation de matières moulables de polyamide selon l'une quelconque des précédentes revendications 1 à 12, **caractérisé en ce qu'**on prépare, dans un premier temps, un compound granulé à partir de chacun des composants (A) et/ou (B) et des charges (C) et le cas échéant (D) ainsi que, le cas échéant, des additifs (E), pour ensuite mélanger ces granulats et y ajouter le cas échéant des quantités supplémentaires de granulats des composants (A) et le cas échéant (B), et ensuite soumettre les granulats à un traitement ultérieur.

15. Utilisation des matières moulables selon l'une des revendications 1 à 14 présentant des valeurs de résilience supérieures à 25 kJ/m$^2$ (mesurées selon Charpy, conformément à la norme ISO 179/2-1 eA) pour produire des corps moulés, notamment des pièces moulées par injection.

16. Procédé de production de corps moulés à partir des matières moulables de polyamide selon l'une des revendications 1 à 12, les corps moulés étant obtenus par moulage par injection, par extrusion, par pultrusion, par injection-soufflage ou par d'autres techniques de mise en forme, le moulage par injection étant particulièrement préféré.

17. Corps moulé, s'agissant notamment d'une pièce moulée par injection, pouvant être obtenu à partir des matières moulables de polyamide selon l'une ou plusieurs des revendications 1 à 12.

18. Corps moulé selon la revendication 17, **caractérisé en ce qu'**il est un boîtier de téléphone portable ou une partie d'un boîtier de téléphone portable.

100 mm

**FIGUR 1**

**FIGUR 2**

**FIGUR 3**

**Abweichung in x Richtung (P7 bis P9)**

FIGUR 4

**Abweichung in x Richtung (P10 to P12)**

**FIGUR 5**

## Abweichung in z Richtung (P13 to P15)

**FIGUR 6**

**Abweichung in z Richtung (P19 to P21)**

**Kontrollpunkt Nr.**

**FIGUR 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0957131 A2
- JP 2006193727 A
- EP 0190011 B1
- EP 0196194 B1
- EP 0199328 B1
- EP 0246620 B1
- EP 0376616 B1
- EP 0400935 B1
- EP 0400935 A
- JP 10219026 A
- JP 2004285487 A
- JP 2006045390 A
- EP 06014372 A
- EP 05025216 A